# EUROPÄISCHE PATENTSCHRIFT

(11) **EP 1 905 973 B1**
(45) Veröffentlichungstag und Bekanntmachung des Hinweises auf die Patenterteilung: **18.02.2009**
(21) Anmeldenummer: 07014733.5
(22) Anmeldetag: 27.07.2007
(51) Int. Cl.: F01N 7/00, F16L 41/00, G01D 11/30

(54) **Abgasführendes Gehäuse oder Rohr einer Abgasanlage einer Brennkraftmaschine**
Exhaust gas case or pipe of an exhaust gas unit for a combustion engine
Boîtier conduisant les gaz d'échappement ou tuyau d'une installation de gaz d'échappement d'un moteur à combustion interne

(30) Priorität: 20.09.2006 DE 102006044736
(43) Veröffentlichungstag der Anmeldung: 02.04.2008
(73) Patentinhaber: ROTH-TECHNIK AUSTRIA Gesellschaft m.b.H., 3193 St.Aegyd a.N. (AT)
(72) Erfinder: Haas, Frank, 77889 Seebach (DE)
(74) Vertreter: Wiedemann, Markus

(56) Entgegenhaltungen:
- WO-A-20/05108754
- DE-A1- 10 346 205
- DE-A1- 19 532 330
- JP-A- 2001 305 097

## Beschreibung

### Stand der Technik

Die Erfindung geht aus von einem abgasführenden Gehäuse oder Rohr einer Abgasanlage einer Brennkraftmaschine eines Kraftfahrzeugs gemäß dem Oberbegriff von Anspruch 1.

In einigen Fällen sind in Öffnungen von abgasführenden Rohren oder Gehäusen sensierende Mittel wie Sensoren oder Sonden von außen eingesetzt, um Eigenschaften des Abgases zu messen. Ein bekanntes Beispiel hierfür bildet eine NOₓ Sonde, welche die Konzentration von Stickoxiden im Abgas eines Fahrzeugs misst und hierzu von außen eine Öffnung des abgasführenden Gehäuses oder Rohres durchragt. Weiterhin sind im Zusammenhang mit Abgasanlagen auch in Öffnungen von abgasführenden Rohren oder Gehäusen von außen eingesetzte Einspritzdüsen oder Einspritzventile als einspritzende Mittel bekannt, welche beispielsweise Harnstofflösungen als Reduktionsmittel auf im Rohr oder Gehäuse angeordnete Katalysatoren spritzen.

Dabei wird die die NOₓ-Sonde bzw. die Einspritzdüse tragende Aufnahmebuchse durch eine mit einem Öffnungsrand der Öffnung des Gehäuses oder Rohrs verschweißte Gewindebuchse mit einem Innengewinde gebildet, in welches ein Außengewinde der NOₓ-Sonde eingeschraubt ist. Eine solche Gewindeverbindung zwischen dem Sensor bzw. der Einspritzdüse und dem Gehäuse oder Rohr bringt mehrere Nachteile mit sich.

Zum einen weisen Sensoren und Einspritzdüsen in der Regel eine kürzere Lebensdauer auf als das sie tragende Gehäuse oder Rohr, so dass diese Bauelemente nach einiger Betriebszeit ausgewechselt werden müssen. Wird beim Auswechseln die Gewindeverbindung beschädigt oder war diese zuvor schon beispielsweise durch Korrosion beschädigt, so müsste, da die Aufnahmebuchse mit dem Rohr oder Gehäuse verschweißt ist, das gesamte Rohr oder Gehäuse zusammen mit dem Sensor oder der Einspritzdüse ebenfalls getauscht werden, was ökonomisch äußerst nachteilig ist. Falls eine besondere Lage des Sensors, der Sonde oder der Einspritzdüse relativ zur Strömung in dem Gehäuse oder Rohr zum Erzielen einer für die Messung optimalen Anströmrichtung bzw. zum Erzielen einer optimalen Einspritzrichtung gefordert ist und deshalb die Mittelachse des Sensors, der Sonde oder der Einspritzdüse nicht mit einer Normalen auf die Mantelwand im Bereich der Öffnung des Gehäuses fluchten oder parallel angeordnet sein und diesbezüglich beispielsweise eine Schräglage einnehmen soll, so stimmt diese geforderte Drehlage in der Regel nicht mit der Drehlage des Sensors, der Sonde oder der Einspritzdüse überein, welche in der vollständig eingeschraubten Endposition eingenommen wird. Wird die geforderte Drehlage mittels der Gewindeverbindung dennoch eingestellt, so besteht das Risiko von Undichtigkeiten, da dann wegen der nicht mehr vollständig eingeschraubten Lage eine axiale Lücke zwischen dem Sensor oder der Einspritzdüse und der Aufnahmebuchse entsteht und etwa zwischengeordnete Dichtungen nicht mehr wirksam sind. Außerdem sind Gehäuse und Rohre von außen meist nicht einsehbar, so dass die Drehlage des Sensors, der Sonde oder der Einspritzdüse nicht festgestellt werden könnte.

Gemäß der DE 103 46 205 A1 wird ein Gehäuse mit einem Sensorelement in eine mit einer Rohröffnung verschweißte Aufnahmebuchse eingesetzt und dort mittels eines separaten Spannrings gehalten. Der Spannring hat radial äußere Spannlaschen, welche ähnlich wie bei einem Gewinde in keilförmige Schlitze in der Aufnahmebuchse einschraubbar sind, so dass das Sensorgehäuse an der Aufnahmebuchse mit einer in Achsrichtung des Sensorgehäuses wirkenden Kraftkomponente axial verspannt ist. Während der Befestigung des Spannrings an der Aufnahmebuchse durch Drehung kann jedoch wegen der dann auch in Umfangsrichtung wirkenden Reibkraft zwischen dem Sensorgehäuse und dem Spannring nicht ausgeschlossen werden, dass sich das Sensorgehäuse in der Aufnahmebuchse verdreht, so dass dann die Drehlage des Sensors, der Sonde oder der Einspritzdüse wiederum nicht eindeutig festgelegt ist.

### Aufgabe der Erfindung

Der Erfindung liegt demgegenüber die Aufgabe zugrunde, ein abgasführendes Gehäuse oder Rohr derart weiter zu entwickeln, dass die sensierenden Mittel oder die einspritzenden Mittel eine definierte Lage, insbesondere eine definierte Drehlage relativ zum Gehäuse oder Rohr einnehmen.

Diese Aufgabe wird erfindungsgemäß durch die Merkmale des Patentanspruchs 1 gelöst.

### Offenbarung der Erfindung

Gemäß Anspruch 1 ist zunächst eine die sensierenden Mittel oder einspritzenden Mittel tragende und wenigstens teilweise umschließende Trägerbuchse in einer definierten Drehlage wenigstens teilweise in die Aufnahmebuchse einsetzbar und dort durch eine lösbare Verbindung zumindest axial- und drehfest gehalten. Dazu ist eine Verdrehsicherung vorgesehen, welche bereits beim Einsetzen der Trägerbuchse in die Aufnahmebuchse als Führung wirksam ist und ein Einsetzen der Trägerbuchse in die Aufnahmebuchse in von einer definierten Drehlage abweichenden Drehlagen verhindert.

Dadurch können die sensierenden Mittel bzw. die einspritzenden Mittel auf einfache Weise gewechselt werden, indem die lösbare Verbindung zwischen der Aufnahmebuchse und der Trägerbuchse gelöst und die Trägerbuchse zusammen mit den sensierenden Mitteln bzw. mit den einspritzenden Mitteln herausgezogen und gegen eine andere Trägerbuchse mit sensierenden Mitteln bzw. mit einspritzenden Mitteln ausgewechselt wird. Die sensierenden Mittel bzw. die einspritzenden Mittel sind dabei durch die sie wenigstens teilweise umschließende Trägerbuchse weitgehend geschützt.

Die drehfeste Aufnahme der Trägerbuchse in der Aufnahmebuchse garantiert, dass sich die sensierenden Mittel bzw. die einspritzenden Mittel stets, insbesondere auch nach deren Wechsel in definierter Lage in Bezug zum Rohr oder Gehäuse und damit auch in Bezug zur Strömung in dem Rohr oder Gehäuse befinden, um eine optimale Anströmung und Messposition der sensierenden Mittel bzw. eine optimale Einspritzrichtung der einspritzenden Mittel zu gewährleisten.

Nicht zuletzt kann die lösbare Verbindung zwischen der Trägerbuchse und der Aufnahmebuchse derart ausgebildet werden, dass sich ein nur geringer axialer Überstand der Trägerbuchse relativ zum Rohr oder Gehäuse ergibt, wodurch die Gefahr der Beschädigung von außen sinkt.

Durch die in den Unteransprüchen aufgeführten Maßnahmen sind vorteilhafte Weiterbildungen und Verbesserungen der im Patentanspruch 1 angegebenen Erfindung möglich.

Wenn die sensierenden Mittel oder die einspritzenden Mittel eine Öffnung im Boden der Trägerbuchse durchragen, wobei ein Abschnitt der sensierenden Mittel oder der einspritzenden Mittel in den Innenraum des Rohres oder des Gehäuses ragt und ein nach außen weisender Abschnitt von einer Mantelwand der Trägerbuchse radial umschlossen ist, sind die sensierenden Mittel bzw. die einspritzenden Mittel gegen Beschädigung durch Fremdeinwirkung von außen weitgehend geschützt.

Besonders bevorzugt sind die Trägerbuchse und die Aufnahmebuchse durch Umformen oder Urformen hergestellt. Dies bringt gegenüber der gedrehten Gewindebuchse des Stands der Technik Kostenvorteile. In diesem Fall ist auch einfach, die Trägerbuchse an ihrer radial äußeren Umfangsfläche mit wenigstens einem ebenen Bereich zu versehen, in welchen ein an der Aufnahmebuchse ausgebildeter Vorsprung eingreift, welcher bevorzugt durch eine Sicke gebildet wird. Beim Einsetzen der Trägerbuchse in die Aufnahmebuchse wirkt der ebene Bereich mit der Sicke als axiale Führung und Verdrehsicherung zusammen. Gegenüber einer möglichen, im Rahmen der Erfindung liegenden Alternative, bei welcher die Drehlage der Trägerbuchse relativ zur Aufnahmebuchse erst in Anschlagposition durch dementsprechend ausgebildete formschlüssige Mittel festgelegt wird, hat dies den Vorteil, dass weniger Korrekturbewegungen notwendig sind, welche die sensierenden Mittel oder die einspritzenden Mittel unter Umständen beschädigen könnten, da die korrekte Drehlage der Trägerbuchse bereits zu Beginn des Einsetzvorgangs festgelegt wird, wo die Verhältnisse noch von außen sichtbar sind.

Wenn der an der Aufnahmebuchse ausgebildete Vorsprung bzw. Sicke in Bezug auf das Gehäuse oder Rohr in dessen Innenraum angeordnet ist, kann der nach außen weisende Abschnitt der Aufnahmebuchse kurz ausfallen, was einen vorteilhaft kleinen axialen Überstand der Aufnahmebuchse in Bezug zum Rohr oder Gehäuse mit sich bringt.

Bevorzugt ist deshalb eine in Bezug auf das Rohr oder das Gehäuse von außen her zugängige lösbare Axialverbindung zwischen der Trägerbuchse und der Aufnahmebuchse vorgesehen, welche erst dann herstellbar ist, wenn die Trägerbuchse bis in Anschlagposition in die Aufnahmebuchse eingesetzt ist.

Gemäß einer Weiterbildung weist die Trägerbuchse an ihrem in Bezug auf das Rohr oder Gehäuse nach außen weisenden Ende einen sich nach radial außen erstreckenden Kragen auf, der gegen ein Ende der Aufnahmebuchse axial anschlagbar ist, wobei die in Bezug auf das Rohr oder Gehäuse nach axial außen weisenden Enden der Trägerbuchse und der Aufnahmebuchse durch ein radial umgreifendes Spannband gegeneinander verspannbar sind.

Die sensierenden Mittel oder die einspritzenden Mittel können in der Trägerbuchse derart gehalten sein, dass ihre Mittelachse einen spitzen Winkel in Bezug zu einer Normalen auf die Mantelwand des Gehäuses im Bereich der Öffnung einnimmt. Dadurch können die sensierenden Mittel bzw. die einspritzenden Mittel stets in definierter Lage in Bezug zum Rohr oder Gehäuse und damit auch in Bezug zur Strömung in dem Rohr oder Gehäuse positioniert werden, um eine optimale Anströmung und Messposition der sensierenden Mittel bzw. eine optimale Einspritzrichtung der einspritzenden Mittel zu gewährleisten.

### Zeichnungen

Ein Ausführungsbeispiel der Erfindung ist in der Zeichnung dargestellt und in der nachfolgenden Beschreibung näher erläutert. In der Zeichnung zeigt
- Fig. 1: eine Querschnittsdarstellung eines abgasführenden Gehäuses mit einem in einer Trägerbuchse aufgenommenen NOₓ-Sensor, welche mit einer Aufnahmebuchse lösbar verbunden ist, gemäß einer bevorzugten Ausführungsform der Erfindung;
- Fig.2: eine Stirnansicht der lösbaren Verbindung zwischen der Trägerbuchse und der Aufnahmebuchse, gesehen von einem Innenraum des Gehäuses;

### Beschreibung des Ausführungsbeispiels

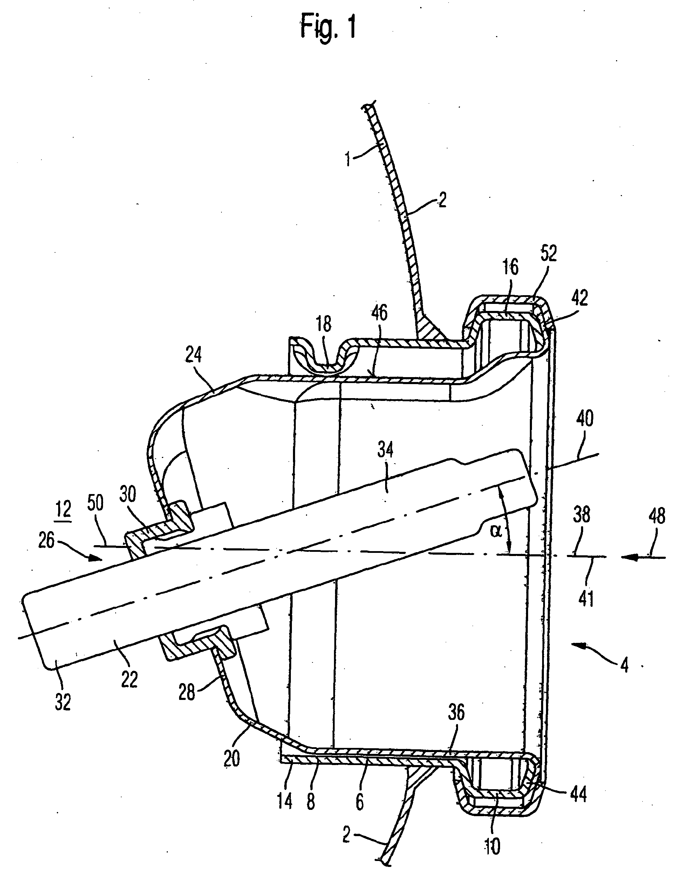

Im bevorzugten Ausführungsbeispiel nach Fig.1 ist ein abgasführendes Gehäuse 1, bevorzugt ein Gehäuse eines Abgasschalldämpfer gezeigt. Eine Mantelwand 2 des Gehäuses 1 weist eine Öffnung 4 auf, in welche eine im wesentlichen zylindrische Aufnahmebuchse 6 eingesetzt und dort durch ihre radial äußere Mantelwand 8 mit einem radial inneren Öffnungsrand der Öffnung 4 vorzugsweise stoffschlüssig verbunden ist, bevorzugt durch Verschweißung. Bei der Aufnahmebuchse 6 handelt es sich um ein durch Urformen oder Umformen hergestelltes, vorzugsweise einstückiges Bauteil, bevorzugt um ein vorzugsweise aus Stahlblech umgeformtes Tiefziehteil.

Die Aufnahmebuchse 6 hat daher einen in Bezug zur Mantelwand 2 des Gehäuses 1 nach außen weisenden Abschnitt 10 und einen in dessen Innenraum 12 weisenden Abschnitt 14. An dem nach außen weisenden Abschnitt 10 der Aufnahmebuchse 6 ist endseitig eine nach radial außen vorspringende, vorzugsweise umlaufende Sicke 16 ausgebildet, welche einen im wesentlichen U-förmigen Querschnitt aufweist. Weiterhin weist die Aufnahmebuchse 6 an ihrem in den Innenraum 12 weisenden Abschnitt 14 eine lokale, nach radial innen vorspringende Sicke 18 auf, ebenfalls mit im wesentlichen U-förmigem Querschnitt.

In die Aufnahmebuchse 6 ist in Bezug zur Mantelwand 2 des Gehäuses 1 von außen her eine hutförmige Trägerbuchse 20 beispielsweise für einen NOₓ-Sensor 22 eingesetzt, vorzugsweise derart, dass ein in den Innenraum 12 des Gehäuses 1 weisender Abschnitt 24 der Trägerbuchse 20 die Aufnahmebuchse 6 axial überragt. Bei der Trägerbuchse 20 handelt es sich ebenfalls um ein durch Urformen oder Umformen hergestelltes, vorzugsweise einstückiges Bauteil, bevorzugt um ein vorzugsweise aus Stahlblech umgeformtes Tiefziehteil.

Der NOₓ-Sensor 22 durchragt eine Öffnung 26 im Boden 28 der Trägerbuchse 20, in dem er gehalten ist, vorzugsweise dadurch, dass der NOₓ-Sensor 22 durch eine Schraubhülse 30 durchgeschraubt ist, welche radial außen mit dem Öffnungsrand der Bodenöffnung 26 der Trägerbuchse 20 vorzugsweise verschweißt ist. Hierdurch kann ein Messkopf 32 des NOₓ-Sensors 22 frei in den Innenraum 12 des Gehäuses 1 hineinragen und dort den Gehalt an NOₓ im Abgas messen. Der restliche, durch die Bodenöffnung 26 der Trägerbuchse 20 ragende und in Bezug zum Innenraum 12 des Gehäuses 1 nach außen weisende Abschnitt 34 des NOₓ -Sensors 22 ist von der Mantelwand 36 der Trägerbuchse 20 vorzugsweise vollständig radial umschlossen, so dass kein axialer Überstand vorhanden ist.

Der NOₓ -Sensor 22 ist in der Trägerbuchse 20 bevorzugt nicht mit deren Mittelachse 38 fluchtend angeordnet sondern derart, dass die Mittelachse 40 des NOₓ -Sensors 22 eine in Bezug zur Mittelachse 38 der Trägerbuchse 20 von einer parallelen oder fluchtenden Lage abweichende Lage und einen spitzen Winkel ∝ in Bezug zur einer Normalen 41 auf die Mantelwand 2 des Gehäuses 1 im Bereich der Öffnung 4 einnimmt. Im vorliegenden Fall fluchtet die Normale 41 mit der Mittelachse 50 der Aufnahmebuchse 6 und mit der Mittelachse 38 der Trägerbuchse 20. Diese Schräglage des NOₓ -Sensors 22 kann beispielsweise dadurch realisiert werden, dass der Boden 28 in Bezug zur Mantelwand 36 der Trägerbuchse 20 beim Tiefziehprozess in eine ebenfalls um den Winkel α geneigte Lage gebracht und die Mittelachse 40 des NOₓ -Sensors 22 senkrecht zum Boden 28 der Trägerbuchse 20 angeordnet wird.

Die Trägerbuchse 20 hat an ihrem axial äußeren Ende einen sich nach radial außen erstreckenden Kragen 42, welcher gegenüber der angrenzenden Mantelwand 36 vorzugsweise um einen Winkel von mehr als 90 Grad zur Aufnahmebuchse 6 hin umgebogen ist. Die Sicke 16 der Aufnahmebuchse 6 ist an ihrer zum Kragen 42 weisenden Stirnfläche 44 demgegenüber um den gleichen Winkel geneigt, so dass der Kragen 42 der Trägerbuchse 20 an der Sicke 16 der Aufnahmebuchse 6 flächig anschlagen kann.

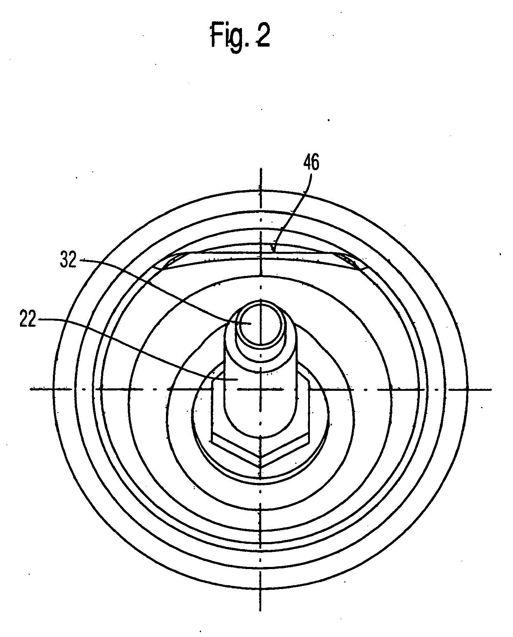

Die Trägerbuchse 20 ist im wesentlichen ebenfalls zylindrisch, mit der Ausnahme, dass sie an ihrem Außenumfang einen beispielsweise nach innen versetzt angeordneten ebenen Bereich 46 aufweist, der am besten anhand von Fig.2 zu sehen ist. Dieser ebene Bereich 46 wirkt mit der Sicke 18 der Aufnahmebuchse 6 als Verdrehsicherung zusammen, wenn die Trägerbuchse 20 in die Aufnahmebuchse 6 durch eine axiale Linearbewegung in Richtung des Pfeils 48 eingesetzt wird, welcher parallel zu den Mittelachsen 38, 50 der Trägerbuchse 20 und der Aufnahmebuchse 6 ist. Beim Einsetzen der Trägerbuchse 20 in die Aufnahmebuchse 6 gleitet der ebene Bereich 46 axial entlang der Sicke 18, wodurch frühzeitig eine Verdrehung der Trägerbuchse 20 relativ zur Aufnahmebuchse 6 verhindert wird. Gleichzeitig wird die Trägerbuchse 20 auch durch ihren restlichen Umfang in der Aufnahmebuchse 6 geführt, bis ihr Kragen 42 an der Sicke 16 der Aufnahmebuchse 6 anschlägt.

Dieser Anschlag wird bevorzugt durch ein den Kragen 42 und die Sicke 16 radial umgreifendes formschlüssiges Mittel, bevorzugt durch ein Spannband 52 gesichert, welches nach Einsetzen der Trägerbuchse 20 in die Aufnahmebuchse 6 aufgesetzt und festgezogen wird. Dadurch wird die bereits drehfeste Trägerbuchse 20 in der Aufnahmebuchse 6 auch axialfest gehalten. Dabei sorgt der Winkel des Kragens und der Stirnfläche 44 der Sicke 16 für Keilwirkung.

## Patentansprüche

1. Abgasführendes Gehäuse (1) oder Rohr einer Abgasanlage einer Brennkraftmaschine eines Kraftfahrzeugs, in dessen Innenraum (12) sensierende Mittel (22) wie ein Sensor oder einspritzende Mittel wie eine Einspritzdüse wenigstens teilweise hineinragen, mit wenigstens einer mit dem Gehäuse (1) oder Rohr lösbar oder unlösbar verbundenen Aufnahmebuchse (6) für die sensierenden Mittel (22) oder die einspritzenden Mittel, **dadurch gekennzeichnet, dass** eine die sensierenden Mittel (22) oder einspritzenden Mittel tragende und wenigstens teilweise umschließende Trägerbuchse (20) in einer definierten Drehlage wenigstens teilweise in die Aufnahmebuchse (6) einsetzbar und dort durch eine lösbare Verbindung zumindest axial- und drehfest gehalten ist, wobei eine Verdrehsicherung (18, 46) vorgesehen ist, welche bereits beim Einsetzen der Trägerbuchse (20) in die Aufnahmebuchse (6) als Führung wirksam ist und ein Einsetzen der Trägerbuchse (20) in die Aufnahmebuchse (6) in von der definierten Drehlage abweichenden Drehlagen verhindert.

2. Abgasführendes Gehäuse oder Rohr nach Anspruch 1, **dadurch gekennzeichnet, dass** die Trägerbuchse (20) an ihrer radial äußeren Umfangsfläche wenigstens einen ebenen Bereich (46) aufweist, in welchen ein an der Aufnahmebuchse (6) ausgebildeter Vorsprung (18) eingreift.

3. Abgasführendes Gehäuse oder Rohr nach Anspruch 2, **dadurch gekennzeichnet, dass** der Vorsprung (18) in Bezug auf das Gehäuse (1) oder Rohr in dessen Innenraum (12) angeordnet ist.

4. Abgasführendes Gehäuse oder Rohr nach Anspruch 2 oder 3, **dadurch gekennzeichnet, dass** der Vorsprung (18) durch eine Sicke gebildet wird.

5. Abgasführendes Gehäuse oder Rohr nach einem der vorhergehenden Ansprüche, **dadurch gekennzeichnet, dass** eine in Bezug auf das Rohr oder das Gehäuse (1) von außen her zugängige lösbare Axialverbindung (42, 16, 52) zwischen der Trägerbuchse (20) und der Aufnahmebuchse (6) vorgesehen ist, welche erst dann herstellbar ist, wenn die Trägerbuchse (20) bis in Anschlagposition in die Aufnahmebuchse (6) eingesetzt ist.

6. Abgasführendes Gehäuse oder Rohr nach Anspruch 5, **dadurch gekennzeichnet, dass** die Trägerbuchse (20) an ihrem in Bezug auf das Rohr oder Gehäuse (1) nach außen weisenden Ende einen sich nach radial außen erstreckenden Kragen (42) aufweist, der gegen ein Ende (16) der Aufnahmebuchse (6) axial anschlagbar ist.

7. Abgasführendes Gehäuse oder Rohr nach Anspruch 6, **dadurch gekennzeichnet, dass** die in Bezug auf das Rohr oder Gehäuse (1) nach außen weisenden Enden (42, 16) der Trägerbuchse (20) und der Aufnahmebuchse (6) durch ein radial umgreifendes Spannband (52) gegeneinander verspannbar sind.

8. Abgasführendes Gehäuse oder Rohr nach einem der vorhergehenden Ansprüche, **dadurch gekennzeichnet, dass** die sensierenden Mittel (22) oder die einspritzenden Mittel in der Trägerbuchse (20) derart gehalten sind, dass ihre Mittelachse (40) einen spitzen Winkel (∝) in Bezug zur einer Normalen (41) auf eine Mantelwand (2) des Gehäuses (1) im Bereich einer Öffnung (4) für die Aufnahmebuchse (6) einnimmt.

9. Abgasführendes Gehäuse oder Rohr nach einem der vorhergehenden Ansprüche, **dadurch gekennzeichnet, dass** die sensierenden Mittel (22) oder die einspritzenden Mittel eine Öffnung (26) im Boden (28) der Trägerbuchse (20) durchragen, wobei ein Abschnitt (32) der sensierenden Mittel (22) oder der einspritzenden Mittel in den Innenraum (12) des Rohres oder des Gehäuses (1) ragt und ein nach außen weisender Abschnitt (34) von einer Mantelwand (36) der Trägerbuchse (20) radial umschlossen ist.

10. Abgasführendes Gehäuse oder Rohr nach einem der vorhergehenden Ansprüche, **dadurch gekennzeichnet, dass** die Aufnahmebuchse (6) mit einem Öffnungsrand einer Öffnung (4) des Gehäuses (1) oder Rohrs stoffschlüssig verbunden ist.

11. Abgasführendes Gehäuse oder Rohr nach einem der vorhergehenden Ansprüche, **dadurch gekennzeichnet, dass** die Trägerbuchse (20) und die Aufnahmebuchse (6) durch Umformen oder Urformen hergestellt sind.

## Claims

1. An exhaust-gas-conducting housing (1) or tube of an exhaust system of an internal combustion engine of a motor vehicle, into the interior (12) of which sensing means (22), such as a sensor, or injecting means, such as an injection nozzle, extend at least partially, comprising at least one receiving sleeve (6), releasably or non-releasably connected to the housing (1) or tube, for the sensing means (22) or the injecting means, **characterised in that** a carrier sleeve (20) carrying and at least partially surrounding the sensing means (22) or the injecting means is at least partially insertable in the receiving sleeve (6) in a predefined rotary position and held there by a releasable connection in an at least axially fixed and anti-twist manner, wherein an anti-twist securing means (18, 46) is provided, which already acts as a guide during insertion of the carrier sleeve (20) into the receiving sleeve (6) and prevents inserting the carrier sleeve (20) in the receiving sleeve (6) in a rotary position different from the predefined rotary position.

2. The exhaust-gas-conducting housing or tube according to claim 1, **characterised in that**, on its radially external circumferential surface, the carrier sleeve (20) has at least one planar area (46) which is engaged by a protrusion (18) formed on the receiving sleeve (6).

3. The exhaust-gas-conducting housing or tube according to claim 2, **characterised in that** the protrusion (18) is arranged in the interior (12) with respect to the housing (1) or tube.

4. The exhaust-gas-conducting housing or tube according to claim 2 or 3, **characterised in that** the protrusion (18) is formed by a bead.

5. The exhaust-gas-conducting housing or tube according to any one of the preceding claims, **characterised in that** a releasable axial connection (42, 16, 52) accessible from the outside with respect to the tube or housing (1) is provided between the carrier sleeve (20) and the receiving sleeve (6), which cannot be established before the carrier (20) has been inserted in the receiving sleeve (6) up to the end stop position.

6. The exhaust-gas-conducting housing or tube according to claim 5, **characterised in that** the carrier sleeve (20), at its end facing the outside with respect to the tube or housing (1), has a radially outwardly extending collar (42) able to abut axially against an end (16) of the receiving sleeve (6).

7. The exhaust-gas-conducting housing or tube according to claim 6, **characterised in that** the ends (42, 16) of the carrier sleeve (20) and the receiving sleeve (6) facing the outside with respect to the tube or housing (1) are clamped against each other by a radially embracing clamping strap (52).

8. The exhaust-gas-conducting housing or tube according to any one of the preceding claims, **characterised in that** the sensing means (22) or the injecting means are held in the carrier sleeve (20) in such a way that their centre axis (40) assumes an acute angle (α) with respect to a normal (41) on a side wall (2) of the housing (1) in the area of an opening (4) for the receiving sleeve (6).

9. The exhaust-gas-conducting housing or tube according to any one of the preceding claims, **characterised in that** the sensing means (22) or the injecting means extend through an opening (26) in the bottom (28) of the carrier sleeve (20), wherein a section (32) of the sensing means (22) or the injecting means extends into the interior (12) of the tube or housing (1) and a section (34) facing toward the outside is radially surrounded by a side wall (36) of the carrier sleeve (20).

10. The exhaust-gas-conducting housing or tube according to any one of the preceding claims, **characterised in that** the receiving sleeve (6) is joined to an opening edge of an opening (4) of the housing (1) or tube in a metallurgical manner.

11. The exhaust-gas-conducting housing or tube according to any one of the preceding claims, **characterised in that** the carrier sleeve (20) and the receiving sleeve (6) are made by forming or primary shaping.

## Revendications

1. Bâti conducteur de gaz d'échappement (1) ou tuyau d'une installation de gaz d'échappement d'un moteur à combustion interne d'un véhicule automobile dans l'espace intérieur (12) duquel des moyens de détection (22) tels qu'un détecteur ou des moyens d'injection comme une tuyère d'injection pénètrent au moins partiellement, avec au moins une boîte de logement (6) reliée de manière amovible ou inamovible au bâti (1) ou au tuyau pour les moyens de détection (22) ou les moyens d'injection, **caractérisé en ce qu'**une boîte de support (20) qui porte et enferme au moins partiellement les moyens de détection (22) ou les moyens d'injection peut être mise en place au moins partiellement dans la douille de logement (6) dans une position de rotation définie et est maintenue au moins résistante à la poussée axiale et à la rotation par une connexion amovible, cependant qu'il est prévu un blocage contre la torsion (18, 46) qui est efficace comme guidage dès la mise en place de la boîte de support (20) dans la boîte de logement (6) et empêche une mise en place de la boîte de support (20) dans la boîte de logement (6) dans des positions de rotation qui diffèrent de la position de rotation définie.

2. Bâti conducteur de gaz d'échappement ou tuyau selon la revendication 1, **caractérisé en ce que** la boîte de support (20) présente, sur sa surface périphérique extérieure radialement, au moins une zone plane (46) dans laquelle s'engrène une saillie (18) configurée sur la boîte de logement (6).

3. Bâti conducteur de gaz d'échappement ou tuyau selon la revendication 2, **caractérisé en ce que** la saillie (18) est placée par rapport au bâti (1) ou au tuyau dans l'espace intérieur (12) de celui-ci.

4. Bâti conducteur de gaz d'échappement ou tuyau selon la revendication 2 ou 3, **caractérisé en ce que** la saillie (18) est formée par une moulure.

5. Bâti conducteur de gaz d'échappement ou tuyau selon l'une des revendications précédentes, **caractérisé en ce qu'**il est prévu une connexion axiale (42, 16, 52) amovible, accessible de l'extérieur par rapport au tuyau ou au bâti (1), entre la boîte de support (20) et la boîte de logement (6), connexion qui ne peut être réalisée que lorsque la boîte de support (20) est mise en place jusque dans la position de butée dans la boîte de logement (6).

6. Bâti conducteur de gaz d'échappement ou tuyau selon la revendication 5, **caractérisé en ce que** la boîte de support (20) présente, à son extrémité orientée vers l'extérieur par rapport au tuyau ou au bâti (1), un collet (42) qui s'étend radialement vers l'extérieur qui peut être bloqué axialement contre une extrémité (16) de la boîte de logement (6).

7. Bâti conducteur de gaz d'échappement ou tuyau selon la revendication 6, **caractérisé en ce que** les extrémités (42, 16) de la boîte de support (20) et de la boîte de logement (6) qui sont orientées vers l'extérieur par rapport au tuyau ou au bâti ( 1) peuvent être haubanées l'une contre l'autre par une bande de serrage (52) enveloppant radialement.

8. Bâti conducteur de gaz d'échappement ou tuyau selon l'une des revendications précédentes, **caractérisé en ce que** les moyens de détection (22) ou les moyens d'injection sont maintenus dans la boîte de support (20) de telle manière que leur axe central (40) fait un angle aigu (α) par rapport à la normale sur une paroi d'enveloppe (2) du bâti (1) dans la zone d'une ouverture (4) pour la boîte de logement (6).

9. Bâti conducteur de gaz d'échappement ou tuyau selon l'une des revendications précédentes, **caractérisé en ce que** les moyens de détection (22) ou les moyens d'injection traversent une ouverture (26) dans le fond (28) de la boîte de support (20), une portion (32) des moyens de détection (22) ou des moyens d'injection faisant saillie dans l'espace intérieur (12) du tuyau ou du bâti (1) et une portion (34) orientée vers l'extérieur étant enfermée radialement par une paroi d'enveloppe (36) de la boîte de support (20).

10. Bâti conducteur de gaz d'échappement ou tuyau selon l'une des revendications précédentes, **caractérisé en ce que** la boîte de logement (6) est reliée à un bord d'ouverture d'une ouverture (4) du bâti (1) ou du tuyau en étant scellée par la matière.

11. Bâti conducteur de gaz d'échappement ou tuyau selon l'une des revendications précédentes, **caractérisé en ce que** la boîte de support (20) et la boîte de logement (6) sont fabriquées par formage ou formage primaire.
